# EUROPÄISCHE PATENTANMELDUNG

(11) **EP 0 779 149 A1**
(43) Veröffentlichungstag der Anmeldung: **18.06.1997**
(21) Anmeldenummer: 96116727.7
(22) Anmeldetag: 18.10.1996
(51) Int. Cl.: B41F 33/00

(54) **Vorrichtung zum Regeln der Feuchtmittelmenge einer Druckmaschine**

(30) Priorität: 15.12.1995 DE 19546971
(71) Anmelder: Baldwin-Gegenheimer GmbH, D-86165 Augsburg (DE)
(72) Erfinder: Müller, Walter R., 64711 Erbach (DE)
(74) Vertreter: Vetter, Ewald Otto, Dipl.-Ing.

(57) **Zusammenfassung**

Vorrichtung einer Druckmaschine zur kontinuierlichen Überwachung und Konstanthaltung des prozentualen Anteils eines flüchtigen Bestandteils eines Flüssigkeitsgemischs der Druckmaschine, insbesondere des Anteils von Alkohol oder eines Alkoholersatzstoffes in Feuchtwasser einer Offset-Druckmaschine. Es ist eine Regelvorrichtung (4) vorgesehen, welche einen Meßstrecken-Kreislauf (34) zur Zirkulation des Flüssigkeitsgemisches separat von einem Arbeitskreislauf (12) aufweist. Die Regelvorrichtung (4) enthält eine Dichte-Meßvorrichtung (4) mit einem Schwingungskörper, der zu mechanischen Schwingungen anregbar ist und mit dem Flüssigkeitsgemisch des Meßstrecken-Kreislaufs (34) derart in Berührung ist, daß die Schwingungsbewegungen des Schwingungskörpers auf das Flüssigkeitsgemisch übertragen werden. Die Regelvorrichtung weist eine Mikrocomputereinheit (52) auf, welche in Abhängigkeit von der Reaktion des Flüssigkeitsgemischs auf diese Schwingungen des Schwingungskörpers ein Meßsignal erzeugt, welches dem prozentualen Anteil des flüchtigen Bestandteils des Flüssigkeitsgemischs entspricht.

## Beschreibung

Die Erfindung betrifft eine Vorrichtung einer Druckmaschine zur kontinuierlichen Überwachung und Konstanthaltung des prozentualen Anteils eines flüchtigen Bestandteils eines Flüssigkeitsgemisches der Druckmaschine, insbesondere des Anteils von Alkohol oder eines Alkoholersatzstoffs in Feuchtwasser einer Offset-Druckmaschine.

Eine solche Vorrichtung ist aus der DE-A 1 536 422 bekannt. Bei ihr wird der prozentuale Anteil eines flüchtigen Bestandteils von Feuchtwasser dadurch gemessen, daß mit einem Schwimmkörper die Dichte des Feuchtmittels ermittelt und anhand der Dichte der prozentuale Anteil des flüchtigen Bestandteils ermittelt wird. Der Ausdruck "prozentualer" Anteil des flüchtigen Bestandteils wird deshalb verwendet, weil durch die Dichtemessung nicht der absolute Gehalt des flüchtigen Bestandteils gemessen wird, sondern nur der prozentuale Anteil an der Gesamtmenge des Flüssigkeitsgemisches. Für die Bedienungsperson einer solchen Vorrichtung kann der prozentuale Anteil oder die absolute Menge des Anteils optisch angezeigt werden. Für die automatische Regelung der Zudosierung von frischem Alkohol oder Alkoholersatzstoff als Ersatz für die verdunstete Menge von Alkohol oder Alkoholersatzstoff kommt es jedoch nicht auf den absoluten Anteil, sondern auf den prozentualen Anteil des flüchtigen Bestandteils in der Gesamtmenge des Flüssigkeitsgemisches an. Ähnliche Vorrichtungen mit einem Schwimmer zur Messung der Dichte des Flüssigkeitsgemisches und, in Abhängigkeit von der gemessenen Dichte, zur Bestimmung und Konstanthaltung von Alkohol in einem Flüssigkeitsgemisch sind auch aus der US-A 3 605 782 und EP-B 0 158 142 bekannt. Auch sie fördern jeweils soviel Alkohol in das Flüssigkeitsgemisch nach, wie Alkohol in der Druckmaschine sich verflüchtigt oder verdampft, um dadurch den prozentualen Anteil des flüchtigen Bestandteils in dem Flüssigkeitsgemisch konstant zu halten.

Die Meßgenauigkeit der bekannten Vorrichtungen reicht dazu aus, den prozentualen Anteil von Alkohol zu messen, wenn der Alkoholgehalt beispielsweise 15% beträgt. Die Meßgenauigkeit dieser bekannten Geräte ist jedoch nicht mehr ausreichend, wenn niedrige Mengen eines flüchtigen Bestandteiles wie beispielsweise Alkohol in einem Flüssigkeitsgemisch gemessen werden sollen, beispielsweise ein Alkoholgehalt zwischen 1% und 4%. Die Genauigkeit der bekannten Geräte wird auch durch Schmutz beeinträchtigt, welcher sich an dem Schwimmkörper ansammelt.

Im Offset-Druckverfahren werden die nicht-druckenden Stellen der Druckplatte eines Druckplattenzylinders mit einem sogenannten Feuchtwasser oder Wischwasser befeuchtet. Das Feuchtwasser besteht hauptsächlich aus Wasser, welchem Zusatzstoffe und Alkohol oder ein Alkoholersatzstoff hinzugefügt werden. Der Alkohol oder Alkoholersatzstoff verdunstet relativ schnell und der verdunstete Teil muß kontinuierlich ersetzt werden, damit das Mischungsverhältnis der Komponenten konstant bleibt. Der Alkohol oder Alkoholersatzstoff dient neben anderen Funktionen dazu, daß das Feuchtwasser auf der Druckplatte schnell verdunstet, damit der Druckprozeß mit hoher Geschwindigkeit arbeiten kann. Wasser hat einen pH-Wert von ungefähr 7 bis 8. Die Zusatzstoffe dienen zur Reduzierung und Stabilisierung des pH-Wertes bei etwa 5,2 bis 5,5. Ferner dienen die Zusatzstoffe zur Verhinderung einer Algenbildung und von Kalkablagerungen in der Vorrichtung. Je nach Qualität des Wassers werden unterschiedliche Zusatzstoffe benötigt.

Als Alkohol wird hauptsächlich Isopropylalkohol verwendet. Dieser hat schädliche Nebenwirkungen. Aus diesem Grunde will der Gesetzgeber die zulässige Menge an Isopropylalkohol drastisch reduzieren, möglichst vollständig vermeiden.

Durch die Erfindung soll die Aufgabe gelöst werden, die Vorrichtung derart auszubilden, daß auch niedrige Anteile von flüchtigen Bestandteilen wie beispielsweise Alkohol oder Alkoholersatzstoff in einem Flüssigkeitsgemisch wie beispielsweise Feuchtwasser einer Druckmaschine noch ausreichend genau gemessen werden können, beispielsweise prozentuale Anteile im Bereich von 0,5 bis 4%. Die Vorrichtung soll von Schmutz des Flüssigkeitsgemisch unabhängig arbeiten, schnell reagieren und so ausgebildet werden können, daß sie bei Temperaturänderungen keine falschen Meßwerte liefert.

Diese Aufgabe wird gemaß der Erfindung durch die kennzeichnenden Merkmale von Anspruch 1 gelöst.

Die Erfindung wird im folgenden mit Bezug auf die Zeichnungen anhand einer bevorzugten Ausführungsform als Beispiel beschrieben. In den Zeichnungen zeigen
- Fig. 1: schematisch eine Vorrichtung nach der Erfindung,
- Fig. 2: ein Detail von Fig. 1 in größerem Maßstab,
- Fig. 3: ein in der Vorrichtung gespeichertes Kurvendiagramm.

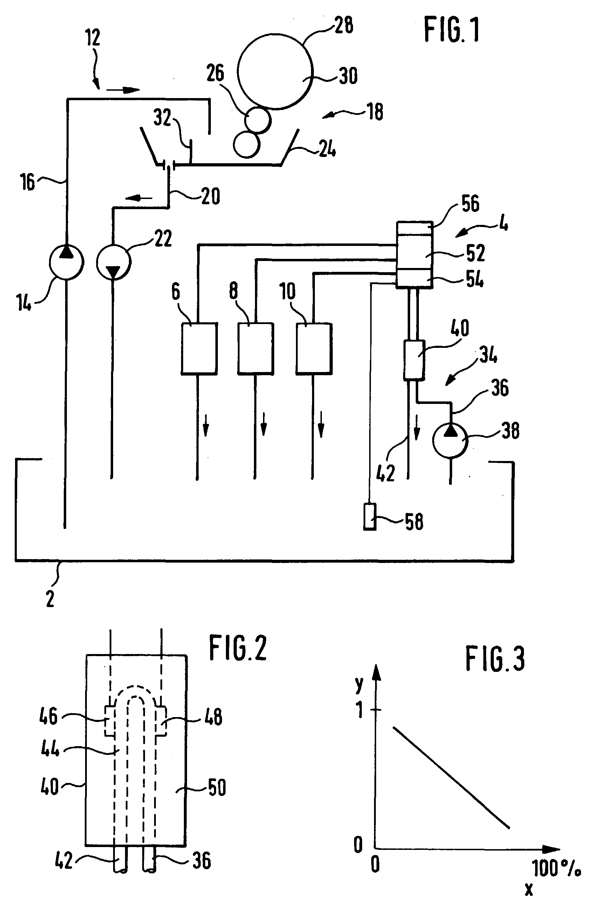

Die Vorrichtung einer Druckmaschine nach Fig. 1 zur kontinuierlichen Überwachung und Konstanthaltung des prozentualen Anteils eines flüchtigen Bestandteils eines Flüssigkeitsgemisches der Druckmaschine wird bei dem hier beschriebenen Ausführungsbeispiel für die kontinuierliche Überwachung und Konstanthaltung des Anteils von Alkohol oder eines Alkoholersatzstoffes in Feuchtwasser einer Offset-Druckmaschine verwendet.

Die Vorrichtung enthält einen geschlossenen Aufbereitungsbehälter 2, welchem, von einer Regelvorrichtung 4 gesteuert, kontrolliert Wasser von einer Wasserquelle 6, Zusatzstoff von einer Zusatzstoff-Quelle 8 und Alkohol oder ein Alkoholersatzstoff von einer Alkoholquelle 10 in der Weise zugeführt wird, daß die prozentualen Anteile dieser Komponenten im Feuchtwasser auf einem vorbestimmten Wert konstant gehalten werden, unabhängig davon, ob eine oder mehrere dieser Komponenten innerhalb der Vorrichtung verbraucht oder anderweitig verloren gehen, beispielsweise durch Verdunstung. Besonders Alkohol oder Alkoholersatzstoff verdunstet relativ schnell, was zur Erhöhung der Druckgeschwindigkeit erwünscht ist. Ein Arbeitskreislauf 12 enthält eine Pumpe 14 in einem Vorlauf 16 zur Zufuhr von Feuchtwasser aus dem Aufbereitungsbehälter 2 zu einer Benutzervorrichtung 18, und einen Rücklauf 20, durch welchen mittels Schwerkraft oder durch eine zweite Pumpe 22 Feuchtwasser, welches von der Benutzervorrichtung 18 nicht verbraucht wurde oder in ihr nicht verdunstet ist, in den Aufbereitungsbehälter 2 zurückfließt. In der dargestellten Ausführungsform ist die Benutzervorrichtung 18 ein Druckwerk, welches eine Feuchtwasserwanne 24 enthält. Das Feuchtwasser strömt vom Vorlauf 16 in die Feuchtwasserwanne 24 und wird aus dieser durch Übertragungswalzen 26 auf die Druckplatte 28 am Umfang eines Druckplattenzylinders 30 der Offset-Druckmaschine übertragen. Der überschüssige Teil des Feuchtwassers gelangt aus der Feuchtwasserwanne 24 über einen Überlauf 32 in den Rücklauf 20. Das Feuchtwasser oder eine in ähnlicherweise einen flüchtigen Bestandteil enthaltendes Flüssigkeitsgemisch kann auf diese Weise auch auf einen anderen Zylinder übertragen werden anstatt auf einen Druckplattenzylinder.

Zur Regelvorrichtung 4 gehört ein zweiter Kreislauf 34, der als Meßstrecke dient und im folgenden als Meßstrecken-Kreislauf bezeichnet wird. Dieser Meßstrecken-Kreislauf 34 besteht aus einem Vorlauf 36 mit einer Pumpe 38 zur Förderung von Feuchtwasser aus dem Aufbereitungsbehälter 2 durch ein Meßgerät 40 hindurch und dann über einen Rücklauf 42 durch Schwerkraft oder durch den Druck der Pumpe 38 des Vorlaufes 36 zurück in den Aufbereitungsbehälter 2.

Das Meßgerät 40 ist eine Dichte-Meßvorrichtung zur Messung der Dichte des Feuchtwassers im Aufbereitungsbehälter 2.

Die Dichte-Meßvorrichtung 40 enthält einen Schwingungskörper 44 in Form eines U-förmigen Rohres, an welches der Vorlauf 36 und der Rücklauf 42 über flexible Schläuche angeschlossen sind, so daß der Schwingungskörper oder das U-Rohr 44 vom Feuchtwasser des Meßstrecken-Kreislaufes 34 durchströmt wird. Der Schwingungskörper 44 kann in mechanische Schwingungen versetzt werden und er überträgt diese Schwingungen auf das durch ihn hindurchfließende Feuchtwasser, so daß die Masse des schwingenden Systems aus dem Schwingungskörper 44 und der in ihm enthaltenen Menge Feuchtwasser besteht. Am Schwingungskörper 44 ist ein Schwingungserzeuger 46 befestigt, welcher elektrisch erregt wird und dadurch im Schwingskörper 44 die genannten Schwingungen erzeugt. Der Schwingungserzeuger 46 könnte auch von mechanischer, hydraulischer oder pneumatischer Natur sein, statt elektrisch. Ein Schwingungssensor 48 ist an einer anderen Stelle des Schwingungskörpers 44 befestigt und misst dessen Schwingungsamplituden und erzeugt in Abhängigkeit von diesen Amplituden ein elektrisches Signal. Der Schwingungssensor 48 könnte auch an einem Gehäuse 50 der Dichte-Meßvorrichtung 40 befestigt sein und über ein Übertragungsmedium die Schwingungen des Schwinungserzeugers indirekt messen.

Die Regelvorrichtung 4 enthält eine Rechnereinheit oder Mikrocomputereinheit 52, an welchen sowohl der Schwingungserzeuger 46 als auch der Schwingungssensor 48 elektrisch angeschlossen sind. Die Mikrocomputereinheit 52 erzeugt in Abhängigkeit von den Signalen des Schwingungssensors 48 und damit in Abhängigkeit von der Reaktion des Feuchtwassers auf die Schwingungen des Schwingungskörpers 44 ein Meßsignal, welches dem prozentualen Anteil des flüssigen Bestandteils Alkohol entspricht. Dieses Meßsignal bewirkt, daß von der Alkoholquelle 10 Alkohol in den Aufbereitungsbehälter 2 zugeführt wird, wenn der prozentuale Anteil des Alkohols im Feuchtwasser unter einen vorbestimmten Sollwert abgesunken ist.

In der Mikroprozessoreinheit 52 ist nach Art eines in Fig. 3 dargestellten Diagrammes die Funktion gespeichert, durch welche jeder Dichtewert des Feuchtwasser ein bestimmter Alkoholprozentsatz zugeordnet ist. Die Dichtewerte sind auf der y-Achse und die Alkoholwerte auf der x-Achse aufgetragen. Dies bedeutet, daß für jeden gemessenen Dichtewert des Feuchtwassers aus dem gespeicherten Diagramm der zugehörige Alkoholprozentsatz des Feuchtwassers abgelesen werden kann.

Je nach Art des Druckprozesses und je nach Art des für das Feuchtwasser verwendeten Wassers, muß das Feuchtwasser eine andere Zusammensetzung hinsichtlich der Art und der Menge der verwendeten Zusatzstoffe und des Alkohols oder Alkoholersatzstoffs haben. Für jede verschiedene Art von Feuchtwasser ist eine eigene Diagrammkurve entsprechend Fig. 3 in der Mikrocomputereinheit 52 gespeichert. Die Mikrocomputereinheit 52 ist mit einer Umschaltvorrichtung 54 versehen, an welcher eine Bedienungsperson auf die verschiedenen Diagrammkurven umschalten kann. Dadurch kann die Vorrichtung an verschiedene Druckverfahren und verschiedene Parameter des Druckverfahrens sowie an verschiedene Arten von Feuchtwasser angepaßt werden, durch einfaches Umschalten an der Umschaltvorrichtung 54.

Die Mikrocomputereinheit 52 kann die vom Schwingungssensor 48 erzeugten Signale dazu benutzen, entweder die Schwingungsdämpfung zu messen und daraus das Meßsignal erzeugen oder, in bevorzugter Ausführungsform, die Eigenfrequenz oder Resonanzfrequenz, des aus dem rohrförmigen Schwingungskörper 44 und der in ihm enthaltenen Menge an Feuchtwasser bestehenden Schwingungssystems nach der Fourier-Analyse errechnen und daraus das Meßsignal erzeugen. Die Eigenfrequenz ist von der Dichte des Feuchtwassers abhängig und ändert sich deshalb entsprechend einer Änderung der Dichte. Bei den Verfahren zur Bestimmung der Eigenfrequenz oder Resonanzfrequenz wird der Schwingungskörper 44 solange vom Schwingungserzeuger 46 mit verschiedenen Schwingungsfrequenzen in Schwingungen versetzt, bis diese Frequenz der Eigenfrequenz entspricht. Wenn sich die Dichte ändert, wird bei der nächsten Serie von verschiedenen Erregerfrequenzen wiederum erneut die Eigenfrequenz ermittelt. In der Mikrocomputereinheit 52 sind ähnlich dem Diagramm von Fig. 3 die Eigenfrequenzen und die ihnen entsprechenden Dichtewerte gespeichert. In anderen Ausführungsformen ist in der Mikrocomputereinheit 52 ein Diagramm gemäß Fig. 3 gespeichert, wobei wiederum auf der x-Achse die Alkoholprozente, jedoch auf der y-Achse die Resonanzfrquenzen des Feuchtwassers aufgetragen sind. Wenn für verschiedene Betriebsarten oder für die Verwendung von verschiedenen Arten von Wasser die Zusammensetzung des Feuchtwassers hinsichtlich der Komponentenarten und der prozentualen Anteile dieser Komponenten geändert wird, sind in der vorstehend beschriebenen Weise mehrere Diagrammkurven ähnlich Fig. 3 gespeichert und die Mikroprozessoreinheit 54 ist auf jede einzelne dieser Diagrammkurven umschaltbar durch die Umschaltvorrichtung 54.

Mit dem Ausdruck "Anteil" ist im Rahmen dieser Beschreibung jeweils der "Volumenanteil" gemeint, jedoch kann in anderer Ausführungsform auch mit den "Gewichtsanteilen" gearbeitet werden.

An die Mikroprozessoreinheit 52 ist ein Display 56 elektrisch angeschlossen, welches in Abhängigkeit vom Meßsignal den prozentualen Anteil oder den absoluten Wert des Anteils des flüchtigen Bestandteils anzeigt.

Die Regelvorrichtung 4 weist einen Temperatursensor 58 zur Messung der Temperatur des Flüssigkeitsgemisches im Aufbereitungsbehälter 2 auf und enthält Mittel in der Mikrocomputereinheit 52 zur Kompensation von Meßfehlern in Folge von Temperaturänderungen.

## Patentansprüche

1. Vorrichtung einer Druckmaschine zur kontinuierlichen Überwachung und Konstanthaltung des prozentualen Anteils eines flüchtigen Bestandteils eines Flüssigkeitsgemisches der Druckmaschine, insbesondere des Anteils von Alkohol oder eines Alkoholersatzstoffes im Feuchtwasser einer Offset-Druckmaschine, enthaltend folgende Merkmale: einen Aufbereitungsbehälter (2), welchem die Bestandteile des Flüssigkeitsgemisches zuführbar sind; einen Arbeitskreislauf (12) zur Zirkulation des Flüssigkeitsgemisches vom Aufbereitungsbehälter (2) zu einer Benutzervorrichtung (18) und dann wieder zurück in den Aufbereitungsbehälter; eine Regelvorrichtung (4), welche einen Meßstrecken-Kreislauf (34) zur Zirkulation des Flüssigkeitsgemisches vom Aufbereitungsbehälter (2) durch eine Dichte-Meßvorrichtung (40) und dann zurück in den Aufbereitungsbehälter (2) aufweist und welche in Abhängigkeit von dem, mit Hilfe der Dichte-Meßvorrichtung (4) gemessenen, Dichtewert die Zufuhr des flüchtigen Bestandteils in den Aufbereitungsbehälter derart regelt, daß der prozentuale Anteil des flüchtigen Bestandteils einen vorbestimmten Wert hat und auf diesem Wert ungefähr konstant gehalten wird, unabhängig von der Verdunstungsrate des flüchtigen Bestandteils aus dem Flüssigkeitsgemisch;
**dadurch gekennzeichnet,** daß die Dichte-Meßvorrichtung (40) einen Schwingungskörper (44) enthält, welcher zu mechanischen Schwingungen anregbar und mit dem Flüssigkeitsgemisch derart in Berührung ist, daß die Schwingungsbewegungen des Schwingungskörpers (44) auf das Flüssigkeitsgemisch übertragen werden; daß ein Schwingungserzeuger (46) am Schwingungskörper (44) zur Erzeugung der Schwingungen vorgesehen ist; daß die Regelvorrichtung (4) eine Mikrocomputereinheit (52) enthält, welche in Abhängigkeit von der Reaktion des Flüssigkeitsgemischs auf diese Schwingungen des Schwingungskörpers (44) ein Meßsignal erzeugt, welches dem gemessenen Dichtewert des Flüssigkeitsgemisches und dadurch auch dem prozentualen Anteil des flüssigen Bestandteils im Flüssigkeitsgemisch entspricht.

2. Vorrichtung nach Anspruch 1,
**dadurch gekennzeichnet,** daß der Schwingungskörper (44) ein von dem Flüssigkeitsgemisch durchströmtes Rohr ist, welches zusammen mit dem in ihm enthaltenen Teil des Flüssigkeitsgemischs eine bestimmte Eigenfrequenz hat, wobei diese Eigenfrequenz von der Dichte des Flüssigkeitsgemisches abhängig ist und sich deshalb bei einer Änderung der Dichte ebenfalls entsprechend ändert, und daß die Mikrocomputereinheit (52) derart ausgebildet ist, daß sie in Abhängigkeit von den sich ändernden Eigenfrequenzen das Meßsignal bildet.

3. Vorrichtung nach Anspruch 2,
**dadurch gekennzeichnet,** daß am Schwingungskörper (44) ein Schwingungssensor (48) angeordnet ist, welcher an die Mikroprozessoreinheit (52) elektrisch angeschlossen ist und ihr in Abhängigkeit von den gemessenen Schwingungen des Schwingungskörpers (44) entsprechende elektrische Signale meldet, daß die Mikrocomputereinheit (52) anhand von diesen Signalen die Eigenfrequenz des Flüssigkeitsgemisches errechnet, und daß die Mikrocomputereinheit (52) in Abhängigkeit von diesen Eigenfrequenzen das Meßsignal erzeugt.

4. Vorrichtung nach einem der vorhergehenden Ansprüche,
**dadurch gekennzeichnet,** daß die Mikrocomputereinheit (52) nach Art einer Kurve die Abhängigkeit des prozentualen Anteils des flüchtigen Bestandteils von der Dichte als Funktion gespeichert hat, so daß die Mikrocomputereinheit für jeden beliebigen Dichtewert einen zugehörigen Wert des prozentualen Anteils des flüchtigen Bestandteils errechnen kann.

5. Vorrichtung nach Anspruch 4,
**dadurch gekennzeichnet,** daß in der Mikrocomputereinheit (52) zwei oder mehr solcher Funktionen nach Art von Kurvendiagrammen gespeichert sind, von welche jede Funktion für eine andere Art des nicht-flüchtigen Anteils des Flüssigkeitsgemisches ausgebildet ist, und daß die Mikrocomputereinheit (52) Mittel (54) zum wahlweisen Umstellen auf die eine oder andere dieser Funktionen aufweist.

6. Vorrichtung nach einem der vorhergehenden Ansprüche,
**gekennzeichnet durch** ein Display (56), welches in Abhängigkeit vom Meßsignal den prozentualen Anteil oder den absoluten Wert des Anteils des flüchtigen Bestandteils anzeigt.

7. Vorrichtung nach einem der vorhergehenden Ansprüche,
**dadurch gekennzeichnet,** daß die Regelvorrichtung (4) einen Temperatursensor (58) zur Messung der Temperatur des Flüssigkeitsgemisches und Mittel zur Kompensation von Meßsignal-Änderungen in Folge von Temperaturänderungen aufweist.
